# EUROPEAN PATENT SPECIFICATION

(11) **EP 0 996 249 B1**
(45) Date of publication and mention of the grant of the patent: **16.04.2003**
(21) Application number: 98402594.0
(22) Date of filing: 19.10.1998
(51) Int. Cl.: H04L 1/18

(54) **Selective repeat ARQ protocol on virtual circuits**
Protokoll zur selektiven automatischen Sendewiederholungsanforderung über virtuelle Verbindungen
Protocole de la demande sélective de répétition automatique de retransmission sur circuits virtuels

(43) Date of publication of application: 26.04.2000
(73) Proprietor: Mitsubishi Electric Information Technology Centre Europe B.V., 1119 NS Schiphol Rijk (NL)
(72) Inventor: Shikama, Toshihiro, 35700 Rennes (FR)
(74) Representative: Maillet, Alain

(56) References cited:
- EP-A- 0 193 091
- LEUNG C H C ET AL: "A NEW EFFICIENT ARQ SCHEME FOR SATELLITE COMMUNICATIONS" COMPUTER NETWORKS AND ISDN SYSTEMS, vol. 23, no. 4, January 1992, pages 229-240, XP000246519 Amsterdam, NL
- NACHUM SHACHAM ET AL: "A SELECTIVE-REPEAT-ARQ PROTOCOL FOR PARALLEL CHANNELS AND ITS RESEQUENCING ANALYSIS" IEEE TRANSACTIONS ON COMMUNICATIONS, vol. 40, no. 4, April 1992, pages 773-782, XP000297814 New York, US
- NACHUN SHACHAM ET AL: "A SELECTIVE REPEAT ARQ PROTOCOL FOR PARALLEL CHANNELS AND ITS RESEQUENCING ANALYSIS" COMPUTER COMMUNICATION TECHNOLOGIES FOR THE 90'S, no. 9, 30 October 1988 - 3 November 1998, pages 259-264, XP000077386 Tel Aviv, Israel
- SHACHAM N ET AL: "RESEQUENCING DELAY AND BUFFER OCCUPANCY IN SELECTIVE REPEAT ARQ WITH MULTIPLE RECEIVERS" IEEE INFOCOM '88: NETWORKS. EVOLUTION OR REVOLUTION?, no. 7, 27 - 31 March 1988, pages 515-524, XP000014061 New Orleans, LA, USA
- PETRAS D ; HETTICH A: "Performance evaluation of the ASR-ARQ protocol for wireless ATM" PROCEEDINGS OF THE 1995 IEEE WIRELESS COMMUNICATION SYSTEM SYMPOSIUM, 27 - 28 November 1995, pages 71-77, XP002085780 Long Island, NY, USA
- PATENT ABSTRACTS OF JAPAN vol. 006, no. 072 (E-105), 7 May 1982 -& JP 57 010562 A (MITSUBISHI ELECTRIC CORP), 20 January 1982

## Description

The present invention concerns a method of controlling errors in packets transmitted on at least one transmission link between a transmitter and a receiver. The present invention applies essentially in cases where the said link can support a plurality of virtual circuits.

Such a method is well-known in the art and is for example depicted in a document entitled 'Performance Evaluation of the ASR-ARQ Protocol dor Wireless ATM' in the name of D.Petras and A.Hellich and published in 'PROCEEDINGS OF THE 1995 IEEE WIRELESS COMMUNICATION SYSTEM SYMPOSIUM'.

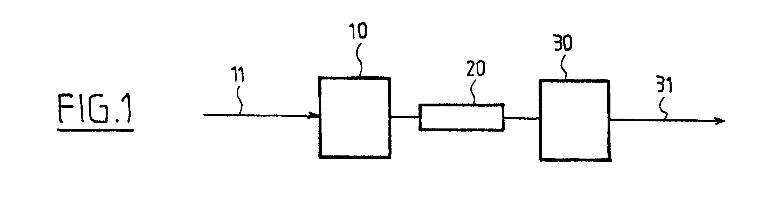

The present invention applies to a transmission system of the type depicted in Fig. 1. In this Fig. 1, a transmitter 10 can be seen which receives, from an input multiplex 11, packets which may belong to several different virtual circuits. This transmitter 10 transmits, to a receiver 30 via a transmission line 20, the packets which it receives from the multiplex 11, in the form of sequences of packets. On receiving the packets from the transmission line 20, the receiver 30 implements a method of controlling errors which takes place during the transmission. More particularly, the packets received in the order of the sequence are delivered to an output multiplex 31. But, if the packet received does not have the expected sequence number notably because of a loss of one or more packets, it is not delivered to the output multiplex 31 as long as the lost packet or packets have not been received or as long as the maximum waiting time has not expired.

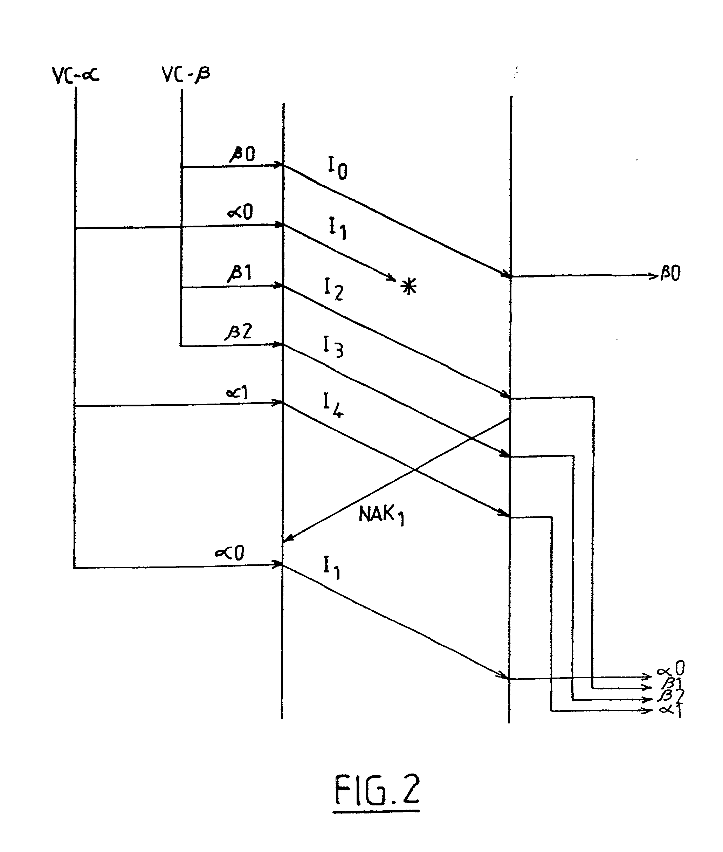

An implementation of a such a method is illustrated in Fig. 2. The left-hand part of this Fig. 2 is a diagram showing, at the transmitter, the transmission of packets as a function of time (the time elapses downwards) and the right-hand part is a diagram showing, at the receiver, the reception of transmitted packets also as a function of time. As for the central part, this depicts the transmission of the packets over the transmission line.

Two virtual circuits VC-α and VC-β are mixtiplexed on the transmission line between the transmitter and receiver. Each packet transmitted over the transmission line carries a sequence number which identifies it, in the sequence of transmitted packets, with respect to the preceding ones and the following ones.

As shown in this diagram, the packet I₀ (the first packet in a sequence of packets) which belongs to the second virtual circuit VC-β has been received correctly. This packet I₀ is then delivered to the output multiplex 31.

The packet I₁ on the other hand has been lost and is therefore not received by the receiver 30. On reception of the packet I₂, the receiver 30 notes that the sequence number in the sequence is not the one required. It is in fact 2 whereas it is the packet I₁, and therefore with the sequence number 1, which is expected. The receiver 30 therefore sends to the transmitter 10 a negative acknowledgement NAK₁ thus requesting the transmitter 10 to re-transmit the packet I₁.

As for the packets I₂ to I₄, they have been correctly received by the receiver. However, because the packet I₁ has not been correctly received, they are not delivered and are then stored whilst awaiting their delivery. It will also be said that they are retained.

After the transmission of the packet I₄, the transmitter 10 receives the negative acknowledgement NAK₁ concerning the packet I₁ and consequently re-transmits this packet I₁, which is received later at the receiver. As can be noted, the receiver delivers to the output multiplex not only the packet I₁ but also the packets I₂ to I₄ which had been retained up till now.

Thus, according to this known method, the packets which have been received after the loss of a packet are not delivered and are retained, until the packet is correctly received.

It is possible that the packet I₁ may not always be correctly received by the receiver 30. Conventionally, the packets I₂, I₃ and I₄ are then delivered after the expiry of a predetermined time, referred to as the maximum waiting time.

It will be noted that such a process requires only the sequence number of sending of the packets in the current sequence in order to function correctly.

However, when several virtual circuits are multiplexed on one and the same transmission link between a transmitter and receiver, it may happen that packets belonging to one virtual circuit are retained because a packet belonging to another virtual circuit has been lost. This eventuality is also illustrated in Fig. 2, where it can be seen that the packets I₁ and I₄ belong to the same virtual circuit VC-α and that the packets I₀, I₂ and I₃ belong to the other virtual circuit VC-β. The packets I₂ and I₃ of the virtual circuit VC-β are retained whereas, with regard to this circuit VC-α, no packet has been lost. Thus, the lost packet I₁ belonging to the virtual circuit VC-α blocks the delivery of the packets of the virtual circuit VC-β.

The aim of the present invention is therefore to resolve this problem in the case of multiplexing of several virtual circuits on the transmission link.

In order to achieve this aim, an error control method according the invention is characterised in that, at the transmitter side, two index are allocated to each packet to be transmitted over the transmission line, one index indicating the sequence number of the packet to be transmitted and the other index has a value amongst at least two specific values, one value meaning that no resequencing is needed and the other (or the others) respectively meaning that the difference between the sequence number of the packet to be transmitted and the previous packet of the same virtual circuit is larger than a predetermined value (or predetermined values), and, at the receiver side, on receipt of a packet corresponding to the one expected, a pointed packet is determined which sequence number is given by the difference between the sequence number of said received packet and the predetermined value representated by the second index carried by said received packet, and if said pointed packet and all packets sent by the transmitter before have already been correctly received by the receiver and delivered to the output multiplex or have been discarded by the life time, said received packet is delivered to the output multiplex, and if it is not the case, said received packet will be retained until the pointed packet and all the packets before will be delivered or discarded by the life time.

According to an advantageous characteristic of the invention, the predetermined value or the lowest predetermined value corresponding to the specific value allocated by the transmitter is equal to 1.

According to an another characteristic of the invention, the values allocated by said transmitter can furthermore take intermediary values each pointing to the previous packet of the same virtual circuit than the packet to be transmitted and, at the receiver side, when a packet carrying an intermediary value is received, the previous packet of the same virtual circuit pointed to by said intermediary value is determined, and if said previous packet has been already delivered, said received packet is delivered, and if this is not the case, said received packet is retained until the pointed packet will be delivered or discarded by the life time.

According to an advantageous characteristic, the predetermined value or the lowest predetermined value corresponding to the specific value allocated by the transmitter is equal to the largest value that can be taken by the intermediary values plus 1.

According to an another characteristic of the invention, said intermediary values allocated by the transmitter represent the difference between the sequence number of the packet to be transmitted and the sequence number of the previous packet in the same virtual circuit, and, at the receiver side, the previous packet of said received packet is determined by the difference between the sequence number of said received packet and the value representated by the second index carried by said received packet.

The above mentioned characteristics of the invention, along with others, will appear more clearly on reading the following description of several embodiments of the invention, said description being made in relation to the attached drawings, among which:
Fig. 1 is a block diagram of a transmission system to which the present invention can be applied,
Fig. 2 is a diagram illustrating an error control method in accordance with a method of the prior art,
Fig. 3 is a diagram illustrating a first implementation of an error control method according to the present invention,
Fig. 4 is a diagram illustrating a second implementation of an error control method according to the present invention,
Fig. 5 is another diagram illustrating another aspect of an error control method according to the present invention, and
Fig. 6 is a diagram illustrating a fourth implementation of an error control method according to the invention, and
Fig. 7 is a diagram illustrating a fifth implementation of an error control method according to the present invention, which is a combination of the methods depicted in Figs. 5 and 6.

According to the present invention, at the transmitter side 10, two indices **i** and **j** are allocated to each packet to be transmitted over the transmission line. The first index **i** represents the sequence number of the packet to be transmitted. The second index **j** has at least two specific values. One value, for example 0, means that no resequencing is needed. This is the case generally for the first packet of a virtual circuit. The other specific value(s) means that the difference between the sequence number **i** of the packet to be transmitted and the previous packet of the same virtual circuit is larger than or equal to a predetermined value **a**.

At the receiver side, on receipt of a packet I_{i,j} which will subsequently be referred to as the just received packet, a check is made whether its sequence number **i** corresponds to the one expected. If such is not the case, this means that at least one packet has been lost. A negative acknowledgement is then sent to the transmitter 10 in order to have it retransmitted.

Furthermore, if its sequence number i corresponds to the one expected, a previous packet is determined which sequence number is given by the difference (**i** - **a**) between the sequence number **i** of the just received packet and the predetermined value **a** representated by the second index **j**.

It is then determined whether all packets sent by the transmitter before the previous packet I_{i-a,x} (packet I_{i-a,x} included) have already been correctly received by the receiver and delivered to the output multiplex or have been discarded by the life time.

If such is the case, the packet I_{i,j} just received is delivered to the output multiplex 31. But, if not, the packet I_{i,j} will be retained until all these packets (I_{0,0} to I_{i-a,x}) are delivered or have been discarded by the life time.

In addition, if the packet I_{i,j} just received is a packet whose receipt is awaited, it is delivered to the output multiplex 31. Then, amongst all the retained packets, those packets that can be delivered if only this one I_{i,j} is, are delivered.

It should be noted that when only one specific value is provided, the corresponding predetermined value **a** must be equal to 1. When more that one specific values are provided, the lowest predetermined value **a** must be equal to 1.

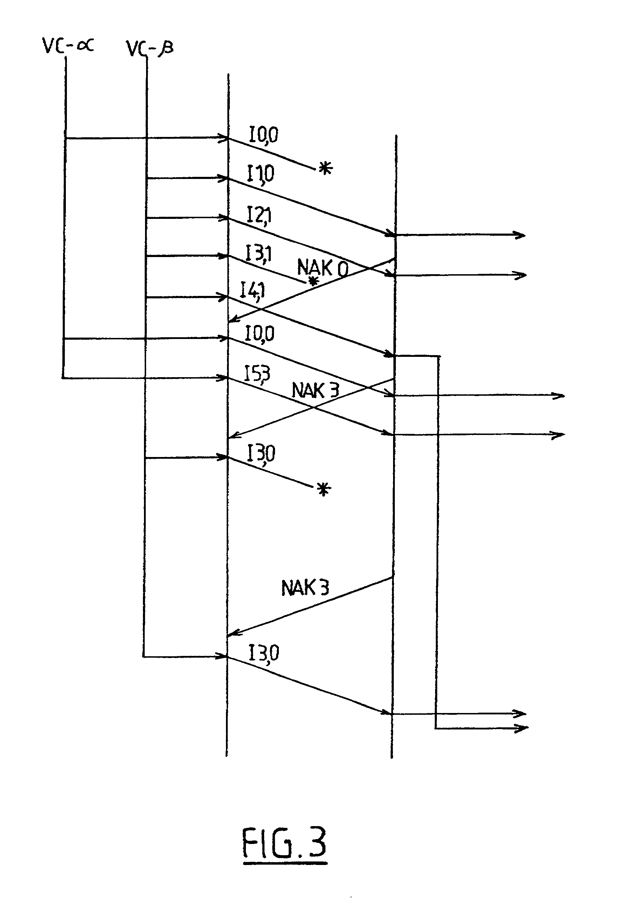

Fig. 3 illustrates an example of implementation of an embodiment of the invention. It can be seen particularly that packets belong to two virtual circuits VC-α and VC-β of the input multiplex 11 and are transmitted over **a** transmission line. The first index **i** of each new packet transmitted over the transmission line is incremented by one unit with respect to the previous one of the sequence. This index is zero for the first packet.

The second index is zero for the first packet in the sequence of each virtual circuit, for example packets I_{0,0} of virtual circuit VC-α and I_{1,0} of virtual circuit VC-β.

In the other cases, the second index represents **a** value which permits to point to a previous packet. For example, packet I_{5,3} points to packet I_{5-3,x}=I_{2,1}.

It should be noted that second index **j** and its value **a** are here confused.

The previous packet of the same virtual circuit than the just received packet is either the pointed packet or a packet before the pointed packet.

For example, if we consider that I_{5,3} is the just received packet, then the pointed packet is I_{2,1} and we can note that the previous packet of the same virtual circuit VC-β, which is packet I_{0,0}, is before packet I_{2,1}. According to this example, packet I_{5,3} is also delivered since the pointed packet I_{2,1} and all the packets before, i.e packets I_{2,1}, I_{1,0} and I_{0,0}, are already delivered to the output multiplex.

If we now consider that I_{4,1} is the just received packet, then the pointed packet is I_{3,1} and we can note that the previous packet of the same virtual circuit VC-α is also the pointed packet I_{3,1}. Since packet I_{3,1} is not still correctly received and then is not delivered, packet I_{4,1} is retained. It will be delivered when packet I_{3,0} will be correctly received.

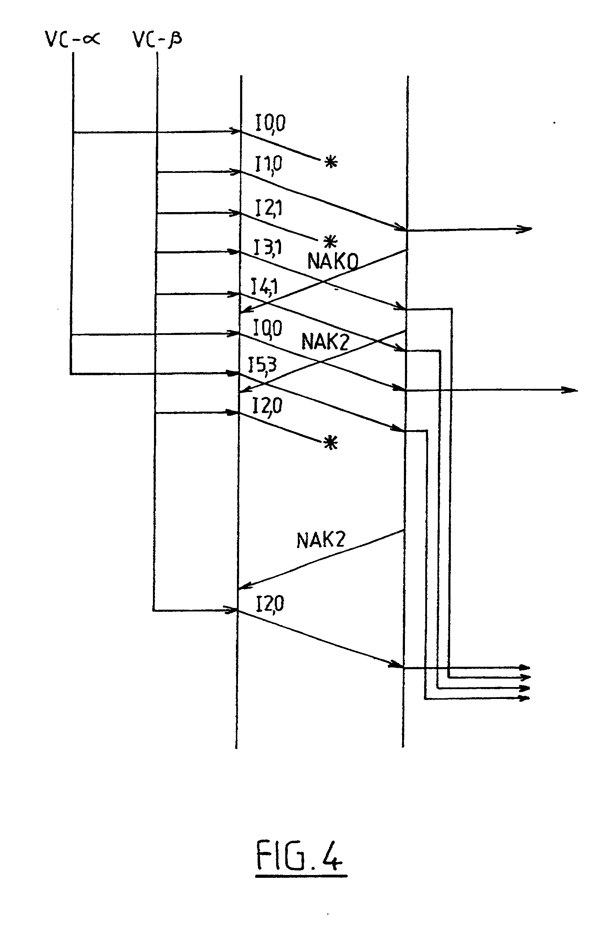

In Fig. 4, packets I_{0,0} and I_{2,1} are not correctly received. If we consider packet I_{3,1} is the just received packet, then the pointed packet is I_{2,1} which is also the previous packet of the same virtual circuit VC-β. Since, packet I_{2,1} and also packet I_{0,0} are not still correctly received and then are not delivered, packet I_{3,1} is retained. It will be delivered when these packets I_{0,0} and I_{2,0} will be correctly received after retransmission. Note that the second index is now zero and not one.

The same is for packets I_{3,1}, I_{4,1} and I_{5,3}. It should be noted that packet I_{5,3} is retained although packet I_{0,0} which belongs to the same virtual circuit VC-α is delivered.

The advantage of the invention is that the second index can be a one-bit index. When it is zero, no packet is pointed to. When it is one, as above explained, it necessarily represents value **a** = 1 and the pointed packet has a sequence number equal to **i** -1, where **i** is the sequence number of the just received packet.

According to another embodiment of the present invention, the second index **j** has more than two specific values. One means no packet is pointed to. Another represents a value **a** and the others, intermediary values, represent each a value comprised between 1 to **a**-1. According to the present embodiment, the predetermined value **a** corresponding to the second specific value must be equal to the largest value (**a** -1) that can taken by the intermediary values plus 1.

In the example of Fig. 4, the second index can be zero, 1 to 14 (a - 1 = 14) and a specific value is 15 (**a** = 15).

Zero means that no resequencing is needed. This is the case generally for the first packet of a virtual circuit. Intermediary values permit to determine the previous packet of the same virtual circuit. The sequence number of that previous packet is the difference between the sequence number of the just received packet and the second index (**i** - **j**).

When a packet I_{i,j} is just received, the previous packet I_{i-j,x} is determined. If the previous packet I_{i-j,x} is already delivered, then the just received packet I_{i,j} is also delivered. If this is not the case, packet I_{i,j} is retained.

The specific value has the same meaning as for the preceding embodiment. It permits to determine a pointed packet and the previous packet of the same virtual circuit is that pointed packet or a packet before that pointed packet. When a packet I_{i,a} is just received, the previous packet I_{i-a,x} is determined. If all the packets before this pointed packet I_{i-a,x} are already delivered, then the just received packet I_{i,a} is also delivered. If this is not the case, packet I_{i,a} is retained.

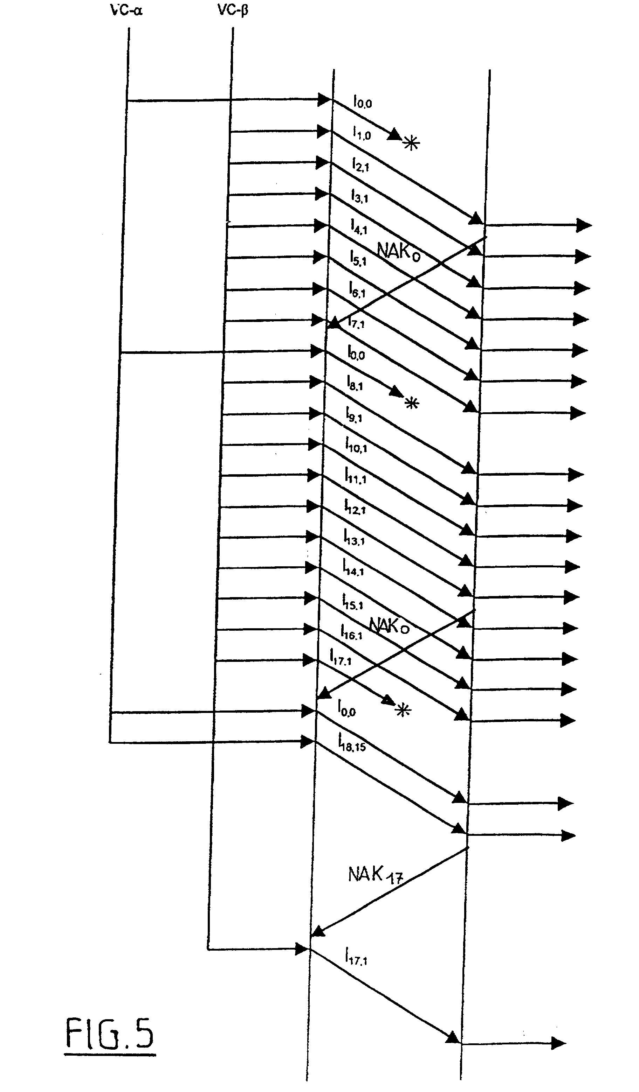

An example of such an embodiment is now described in relation with Fig. 5. In this example, packet I_{0,0} is not correctly received twice. This is also the case for packet I_{17,1}. By way of an example, packet I_{2,1} points to the previous packet of the same virtual circuit, i.e packet I_{2-1,x} = I_{1,0}. Also by way of an example, packet I_{17,1} points to the previous packet of the same virtual circuit, i.e packet I_{17-1,x} = I_{16,1}.

In Fig. 5, 15 is assumed to be the specific value, meaning that the previous packet in the same virtual circuit of the packet which second index is 15 is the pointed packet or before the pointed packet.

When packet I_{18,15} is correctly received, the pointed packet is determined. It is packet I_{18-15,x} = I_{3,1}. The previous packet in the same virtual circuit of packet I_{18,15} is before I_{3,1} since it is packet I_{0,0}. In the case representated in Fig. 5, packet I_{18,15} is delivered since, when it is received, all packets before the pointed packet I_{3,1} are delivered.

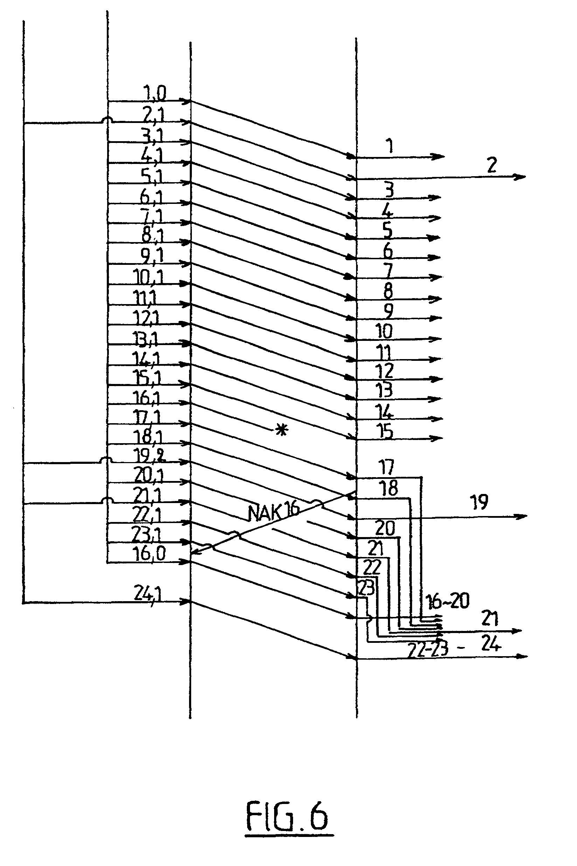

An example of another embodiment is depicted in relation to Fig. 6.

According to that embodiment, the second index can have more than two values. The first is zero meaning that no resequencing is needed. The others represent differents predetermined values **a**_{**1**} to **a**_{**n**}. According to the present embodiment, the lowest predetermined value must be equal to 1. As above, the second index means that the previous packet in the same virtual circuit of a considered packet has a sequence number lower or equal to the sequence number of a pointed packet which sequence number is equal to the difference between the sequence number of the considered packet and the value representated by the second index of that packet. In other words, the difference between the sequence numbers of the considered packet and of the previous packet in the same virtual circuit is larger than or equal to the value representated by the second index.

But according to this example, more than one value can be used.

In Fig. 6, the second index can take four values. The first is zero meaning that no resequencing is needed. The second means that the difference between the sequence numbers of the considered packet and of the previous packet in the same virtual circuit is larger than or equal to one. The third means that the difference is larger or equal to 17 and the fourth that the difference is larger than or equal to, for example, 65.

It should be noted that such a second index can be a two bits code.

In this Fig. 6, packet I_{1,0} is delivered without any resequencing delay, since its second index is zero. As for packets I_{2,1} to I_{15,1}, their second index represent value 1 (note that the second index and its representated value are here confused). They are delivered without any resequencing since all previous packets have been delivered. Packet I_{16,1} is lost and retransmitted and packets I_{17,1} and I_{18,1} which respectively point to packet I_{16,1} and packet I_{17,1} are retained by the receiver in order to wait the correct reception of the retransmitted packet I_{16,x}.

As for packet I_{19,2}, it points to packet I_{19-17,x} = I_{2,1} that means the previous packet in the same virtual circuit is that pointed packet or before. In that case, it is the pointed packet I_{2,1}. Since this pointed packet I_{2,1} and all the packets before (here only packet I_{1,0}) are delivered when packet I_{19,2} is received, packet I_{19,2} is delivered.

Packets I_{20,1} to I_{23,1} including packet I_{21,1} (which don't belong to the same virtual circuit) are retained by the receiver in order to wait for the correct reception of the retransmitted packet I_{16,x}.

Packet I_{24,1} is delivered since all previous packets in the sequence have been delivered.

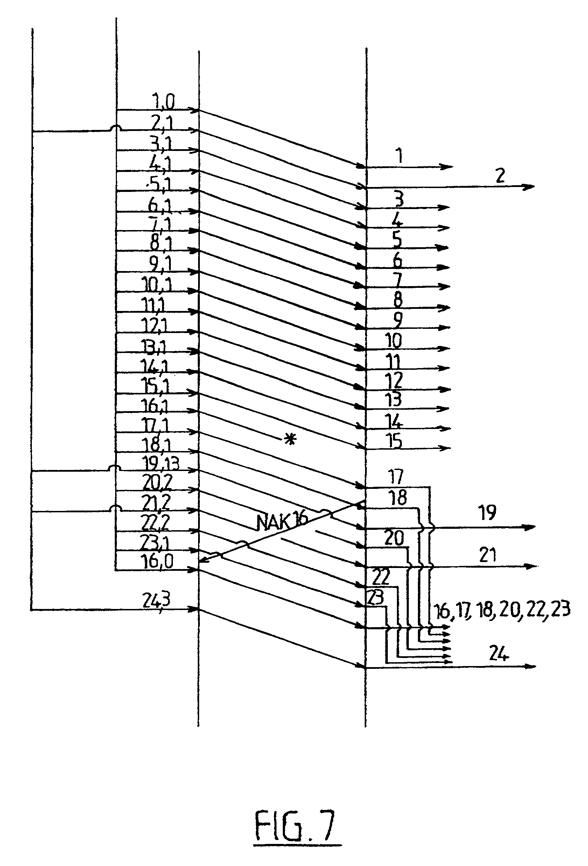

Fig. 7 is another example of an embodiment of the invention combining the embodiments of Fig. 5 and the one of Fig. 6.

In such an embodiment, the second index can have **n** values. First, for example zero, means that no resequencing is needed. (**n - m -1**) values are used for pointing to the previous packet in the same virtual circuit than the considered packet. Each value represents the difference of the sequence numbers of the considered packet and the previous packet in the same virtual circuit. The last **m** values represent predetermined values **a**₁ to **a**_{**m**}, the difference between the sequence number of the considered packet and the sequence number of the previous packet in the same virtual packet being larger than the value **a**_{**i**} representated by the second index. According to the present embodiment, the lowest predetermined value **a**_{**1**} must be equal to the largest value that can be taken by the intermediary values plus one.

According the example depicted in Fig. 7, the second index can take the following values:
- 0, meaning that non resequencing is needed,
- 1 to 12 representating the offset to the previous packet of the same virtual circuit,
- 13 meaning that the difference between the sequence numbers of the considered packet and the previous one of the same virtual circuit is larger than 13,
- 14 meaning that the difference is larger than 31, and
- 15 meaning that the difference is larger than 63.

It should be noted that these values can be 4 bits values and can be applied for 7 bits sequence numbers.

In Fig. 7, packet I_{1,0} is delivered since its second index is zero. Packets I_{2,1} to I_{5,1} points to the immediately previous packet. Since each previous packet has been delivered, these packets I_{2,1} to I_{15,1} are also delivered. Packet I_{16,1} is lost and will be retransmitted. Packets I_{17,1} and I_{18,1} are retained since packet I_{16,1} has not been correctly received.

The previous packet of packet I_{19,13} in the same virtual circuit is packet I_{2,1}. The sequence numbers offset is 17 which is larger than 13 but lower than 31. So, its second index, which is allocated at the emitter side, is 13. Since, at the receiver side, all the packets (here only packets I_{2,1} and I_{1,0}) before packet I_{2,1} (this one included) are delivered, packet I_{19,13} is also delivered.

Packet I_{20,2} is retained since the previous packet I_{18,1} in the same virtual circuit has been retained.

Packet I_{21,2} is delivered since packet I_{19,x} has been delivered. Packets I_{22,2} and I_{23,1} are retained due to the resequencing.

When packet I_{16,0} which has been retransmitted is correctly received, all the packets retained that either directly or undirectly points this one are delivered.

Packet I_{24,3} is delivered since the pointed packet I_{21,x} has been previously delivered.

## Claims

1. A method of controlling errors in packets transmitted over at least one transmission link (20) between a transmitter (10) and a receiver (30), said transmitter (10) receiving from an input multiplex (11) packets belonging to a plurality of virtual circuits and transmitting them in the form of sequences of packets over said at least one transmission link (20), said receiver (30), on reception of a packet, checking whether it is in the order of the sequence or out of life time and if so, delivering it to an output multiplex (31), and if not, sending to the said transmitter (10) a negative acknowledgement (NAK) of the packet or packets which have been lost in order to have it or them retransmitted, **characterised in that** at the transmitter (10) side, two indexes are allocated to each packet to be transmitted over the transmission link (20), one index indicating the sequence number of the packet to be transmitted and the other index has a value amongst at least two specific values, one value meaning that no resequencing is needed and the other or the others respectively meaning that the difference between the sequence numbers of the packet to be transmitted and the previous packet of the same virtual circuit is larger than a predetermined value or predetermined values, and, at the receiver (30) side, on receipt of a packet corresponding to the one expected, a pointed packet is determined which sequence number is given by the difference between the sequence number of said received packet and the predetermined value representated by the second index carried by said received packet, and if said pointed packet and all packets sent by the transmitter before have already been correctly received by the receiver (30) and delivered to the output multiplex (31) or have been discarded by the life time, said received packet is delivered to the output multiplex (31), and if it is not the case, said received packet will be retained until the pointed packet and all the packets before will be delivered or discarded by the life time.

2. A method according to claim 1, wherein the predetermined value or the lowest predetermined value corresponding to the specific value allocated by the transmitter is equal to 1.

3. A method according to claim 1, wherein the values allocated by said transmitter can furthermore take intermediary values each pointing to the packet of the same virtual circuit which is previous to the packet to be transmitted and, at the receiver (30) side, when a packet carrying an intermediary value is received, the previous packet of the same virtual circuit pointed to by said intermediary value is determined, and if said previous packet has been already delivered, said received packet is delivered, and if this is not the case, said received packet is retained until the pointed packet will be delivered or discarded by the life time.

4. A method according to claim 3, wherein the predetermined value or the lowest predetermined value corresponding to the specific value allocated by the transmitter is equal to the largest value that can be taken by the intermediary values plus 1.

5. A method according to claim 3 or 4, wherein said intermediary values allocated by the transmitter represent the difference between the sequence number of the packet to be transmitted and the sequence number of the previous packet in the same virtual circuit, and, at the receiver side, the previous packet of said received packet is determined by the difference between the sequence number of said received packet and the value representated by the second index carried by said received packet.

## Patentansprüche

1. Verfahren zum Steuern von Fehlern in Paketen, die über wenigstens eine Übertragungsverbindung (20) zwischen einem Sender (10) und einem Empfänger (30) übertragen werden, wobei der Sender (10) von einem Eingangsmultiplexer (11) Pakete empfängt, die zu einer Vielzahl von virtuellen Schaltungen gehören, und sie in der Form von Sequenzen von Paketen über die wenigstens eine Übertragungsverbindung (20) sendet, wobei der Empfänger (30) auf einen Empfang eines Pakets hin prüft, ob es in der Reihenfolge der Sequenz oder außerhalb einer Lebensdauer ist, und wenn es so ist, es zu einem Ausgangsmultiplexer (31) ausgibt, und wenn es nicht so ist, zum Sender (10) eine negative Bestätigung (NAK) des Pakets oder der Pakete sendet, das oder die verloren worden ist oder sind, um zu veranlassen, dass es oder sie erneut gesendet wird oder werden, **dadurch gekennzeichnet, dass** auf der Seite des Senders (10) jedem über die Übertragungsleitung (20) zu sendenden Paket zwei Indizes zugeordnet werden, wobei ein Index die Sequenznummer des zu sendenden Pakets anzeigt und der andere Index einen Wert unter wenigstens zwei spezifischen Werten hat, wobei ein Wert bedeutet, dass keine erneute Sequenzbildung nötig ist, und der andere oder die anderen jeweils bedeutet oder bedeuten, dass die Differenz zwischen den Sequenznummern des zu sendenden Pakets und des vorherigen Pakets derselben virtuellen Schaltung größer als ein vorbestimmter Wert oder vorbestimmte Werte ist, und auf der Seite des Empfängers (30) auf einen Empfang eines Pakets entsprechend dem erwarteten hin, einem Paket, auf das gezeigt wird, bestimmt wird, welche Sequenznummer durch die Differenz zwischen der Sequenznummer des empfangenen Pakets und dem vorbestimmten Wert gegeben ist, der durch den zweiten Index dargestellt wird, der durch das empfangene Paket getragen wird, und dann, wenn das Paket, auf das gezeigt wird, und alle Pakete, die durch den Sender gesendet sind, bevor sie durch den Empfänger (30) richtig empfangen und zum Ausgangsmultiplexer (31) ausgegeben worden sind oder durch die Lebensdauer fallengelassen worden sind, das empfangene Paket zum Ausgangsmultiplexer (31) ausgegeben wird, und wenn dies nicht der Fall ist, das empfangene Paket behalten werden wird, bis das Paket, auf das gezeigt wird, und alle Pakete davor ausgegeben oder durch die Lebensdauer fallengelassen sein werden.

2. Verfahren nach Anspruch 1, wobei der vorbestimmte Wert oder der niedrigste vorbestimmte Wert entsprechend dem durch den Sender zugeteilten spezifischen Wert gleich 1 ist.

3. Verfahren nach Anspruch 1, wobei die durch den Sender zugeteilten Werte weiterhin Zwischenwerte annehmen können, die jeweils zu dem Paket derselben virtuellen Schaltung zeigen, das vor dem zu sendenden Paket ist, und, auf der Seite des Empfängers (30) dann, wenn ein einen Zwischenwert tragendes Paket empfangen wird, das vorherige Paket derselben virtuellen Schaltung, auf das durch den Zwischenwert gezeigt wird, bestimmt wird, und dann, wenn das vorherige Paket bereits ausgegeben worden ist, das empfangene Paket ausgegeben wird, und dann, wenn dies nicht der Fall ist, das empfangene Paket behalten wird, bis das Paket, auf das gezeigt wird, ausgegeben oder durch die Lebensdauer fallengelassen sein wird.

4. Verfahren nach Anspruch 3, wobei der vorbestimmte Wert oder der niedrigste vorbestimmte Wert entsprechend dem durch den Sender zugeteilten spezifischen Wert gleich dem größten Wert, der durch den Zwischenwert angenommen werden kann, plus 1 ist.

5. Verfahren nach Anspruch 3 oder 4, wobei die durch den Sender zugeteilten Zwischenwerte die Differenz zwischen der Sequenznummer des zu sendenden Pakets und der Sequenznummer des vorherigen Pakets in derselben virtuellen Schaltung darstellen, und, auf der Seite des Empfängers, das vorherige Paket des empfangenen Pakets durch die Differenz zwischen der Sequenznummer des empfangenen Pakets und dem durch den durch das empfangene Paket getragenen zweiten Index dargestellten Wert bestimmt wird.

## Revendications

1. Méthode de contrôle d'erreurs dans des paquets transmis sur au moins une liaison de transmission (20) entre un émetteur (10) et un récepteur (30), ledit émetteur (10) recevant d'un multiplex d'entrée (11) des paquets appartenant à une pluralité de circuits virtuels et les transmettant sous la forme de séquences de paquets sur ladite au moins première liaison de transmission (20), ledit récepteur (30), lors de la réception d'un paquet, vérifiant s'il est dans l'ordre de la séquence ou en dehors de la durée de vie et si c'est le cas, le délivrant à un multiplex de sortie (31), et si ce n'est pas le cas, envoyant audit émetteur (10) un accusé de réception négatif (NAK) du ou des paquets qui ont été perdus afin de le ou les retransmettre, **caractérisée en ce que** du côté de l'émetteur (10), deux indices sont attribués à chaque paquet à transmettre sur la liaison de transmission (20), un premier indice indiquant le numéro de séquence du paquet à transmettre et l'autre indice ayant une valeur choisie parmi au moins deux valeurs spécifiques, une première valeur signifiant qu'aucune remise en séquence n'est nécessaire et l'autre ou les autres signifiant respectivement que la différence entre les numéros de séquence du paquet à transmettre et le paquet qui précède du même circuit virtuel est supérieure à une valeur prédéterminée ou des valeurs prédéterminées et, du côté du récepteur (30), lors de la réception d'un paquet correspondant à celui attendu, un paquet indiqué est déterminé son numéro de séquence étant déterminé par la différence entre le numéro de séquence dudit paquet reçu et la valeur prédéterminée représentée par le deuxième indice porté par ledit paquet reçu, et si ledit paquet indiqué et tous les paquets envoyés auparavant par l'émetteur ont déjà été correctement reçus par le récepteur (30) et délivrés au multiplex de sortie (31) ou ont été écartés par la durée de vie, ledit paquet reçu est délivré au multiplex de sortie (31), et si ce n'est pas le cas, ledit paquet reçu sera conservé jusqu'à ce que le paquet indiqué et tous les paquets qui précèdent soient délivrés ou écartés par la durée de vie.

2. Méthode selon la revendication 1, dans laquelle la valeur prédéterminée ou la valeur prédéterminée la plus basse correspondant à la valeur spécifique attribuée par l'émetteur est égale à 1.

3. Méthode selon la revendication 1, dans laquelle les valeurs attribuées par ledit émetteur peuvent en outre prendre des valeurs intermédiaires indiquant chacune le paquet du même circuit virtuel qui précède le paquet à transmettre et, du côté du récepteur (30), lorsqu'un paquet portant une valeur intermédiaire est reçu, le paquet précédent du même circuit virtuel indiqué par ladite valeur intermédiaire est déterminé, et si ledit paquet précédent a déjà été délivré, ledit paquet reçu est délivré, et si ce n'est pas le cas, ledit paquet reçu est conservé jusqu'à ce que le paquet indiqué soit délivré ou écarté par la durée de vie.

4. Méthode selon la revendication 3, dans laquelle la valeur prédéterminée ou la valeur prédéterminée la plus basse correspondant à la valeur spécifique attribuée par ledit émetteur est égale à la plus grande valeur qui peut être prise par les valeurs intermédiaires plus 1.

5. Méthode selon la revendication 3 ou 4, dans laquelle lesdites valeurs intermédiaires attribuées par l'émetteur représentent la différence entre le numéro de séquence du paquet à transmettre et le numéro de séquence du paquet précédent dans le même circuit virtuel, et du côté récepteur, le paquet précédant ledit paquet reçu est déterminé par la différence entre le numéro de séquence dudit paquet reçu et la valeur représentée par le deuxième indice porté par ledit paquet reçu.
